(19) 

**Europäisches Patentamt**
**European Patent Office**
**Office européen des brevets**

(11) **EP 1 836 507 B1**

(12) **FASCICULE DE BREVET EUROPEEN**

(45) Date de publication et mention
de la délivrance du brevet:
**21.07.2010 Bulletin 2010/29**

(21) Numéro de dépôt: **06709401.1**

(22) Date de dépôt: **11.01.2006**

(51) Int Cl.:
*G01S 1/00* (2006.01)   *G01S 5/02* (2010.01)

(86) Numéro de dépôt international:
**PCT/FR2006/050013**

(87) Numéro de publication internationale:
**WO 2006/075116 (20.07.2006 Gazette 2006/29)**

(54) **PROCEDE ET DISPOSITIF DE POSITIONNEMENT**

POSITIONIERUNGSVORRICHTUNG UND -VERFAHREN

POSITIONING DEVICE AND METHOD

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **11.01.2005 FR 0500251**

(43) Date de publication de la demande:
**26.09.2007 Bulletin 2007/39**

(73) Titulaire: **Pole Star
31100 Toulouse (FR)**

(72) Inventeurs:
• **GODEFROY, Baptiste**
**F-09210 Lezat/leze (FR)**
• **CARLE, Christian**
**F-31840 Seilh (FR)**

(74) Mandataire: **Poulin, Gérard et al
Brevalex
3, rue du Docteur Lancereaux
75008 Paris (FR)**

(56) Documents cités:
**DE-A1- 10 044 393     US-A- 5 960 341
US-A- 6 148 211        US-A1- 2002 050 944**

**Description**

La présente invention concerne un procédé et un dispositif de positionnement. Elle vise, en particulier, à améliorer les performances d'un système de navigation par satellites, par l'utilisation de la connaissance des constellations de satellites et de l'environnement d'un récepteur de navigation. L'invention permet d'améliorer les performances de navigation dans des environnements pour lesquels ces performances sont largement dégradées par des phénomènes de propagation d'ondes non désirées ou masquées.

Les systèmes de navigation par satellites permettent de positionner un récepteur en trois dimensions (x, y, z) dans le monde entier, grâce à la mesure des temps de propagation des ondes émises par un ensemble de satellites en constellations. Cependant, ces systèmes ne fonctionnent que partiellement dans des environnements difficiles tels que les zones urbaines ou à l'intérieur de bâtiments. En effet, le calcul de la position, basé sur une hypothèse de propagation des signaux électromagnétiques en ligne directe entre les satellites émetteurs et les récepteurs, est rendu impossible lorsque les signaux sont bloqués ou trop atténués par l'environnement du récepteur. Ce calcul peut en outre aboutir à de larges erreurs dues aux réflexions des signaux sur des obstacles environnant le récepteur de navigation.

On connaît différents systèmes de positionnement ou de navigation par satellite.

Ces systèmes de positionnement par satellites ne fonctionnent que partiellement dans des environnements difficiles tels que des zones urbaines ou à l'intérieur de bâtiments. En effet, le calcul de la position, basé sur une hypothèse de propagation en ligne directe des signaux électromagnétiques émis par les satellites, est rendu impossible lorsque les signaux sont réfléchis, bloqués ou trop atténués par les éléments environnant le récepteur (par exemple bâtiments ou montagne, lorsque l'utilisateur est en extérieur ou configuration d'un bâtiment à l'intérieur duquel se trouve l'utilisateur) .

Le document WO 01/86315 décrit un procédé et un dispositif pour déterminer la localisation d'une unité mobile en utilisant des signaux de satellites, en conjonction avec un centre de calcul de localisation qui exploite un système d'information géographique pour simuler des signaux de réception possibles, y compris la puissance du signal et des signaux retardés et réfléchis. La méthode utilise aussi des signaux d'un système de communication cellulaire avec lequel le récepteur mobile est aussi associé, en supplément des données satellitaires et pour communiquer avec le centre de calcul de localisation. En comparant la réception réelle avec le modèle simulé, la méthode améliore l'approximation de la localisation de l'unité mobile.

Ce procédé impose une grande quantité de traitements en temps réel au niveau du centre de calcul et, dans la pratique, son temps de réponse est prohibitif.

La présente invention vise à remédier à ces inconvénients.

Les inconvénients que la présente invention permet de pallier concernent, plus généralement, les problèmes de disponibilité et de précisions des systèmes de navigation par satellites dans des environnements contraignants (zone urbaine, montagne).

A cet effet, selon un premier aspect, la présente invention vise un procédé de positionnement d'un récepteur de signaux de radionavigation, caractérisé en ce qu'il comporte :

- une étape de prédiction, pour une pluralité de positions terrestres, de caractéristiques de réception de signaux émis par des sources de signaux de radionavigation, en fonction des positions desdites sources, de modèles de propagation d'ondes électromagnétiques et de connaissances topographiques de l'environnement de chaque dite position ;
- une étape de réception, par ledit récepteur, de signaux de radionavigation ;
- une étape de mesure de caractéristiques de réception des signaux reçus par ledit récepteur et
- une étape de traitement des caractéristiques réelles mesurées et des caractéristiques prédites pour fournir une information liée au positionnement dudit récepteur.

Grâce à ces dispositions, la durée de traitement et les ressources de traitement mises en oeuvre au niveau du système informatique, sont très limitées. La mise en oeuvre de la présente invention permet d'éviter les sources d'erreur et d'augmenter la couverture du service de positionnement ou de navigation, même quand il n'y a pas suffisamment de signaux de satellites pour déterminer la position du récepteur de manière classique : l'invention permet de prendre en compte des signaux détériorés ou des absences de signal.

Selon des caractéristiques particulières, l'étape de traitement comporte une étape d'appariement des caractéristiques réelles mesurées et des caractéristiques prédites pour fournir au moins une position possible dudit récepteur.

Grâce à ces dispositions, le traitement effectué est rapide et rend possible le positionnement puisque l'appariement consiste à mettre en correspondance les valeurs réelles mesurées et les valeurs prédites avec, éventuellement, une étape d'interpolation entre et/ou d'élimination de certaines positions possibles.

Selon des caractéristiques particulières, au cours de l'étape de traitement, lorsque les prédictions de plusieurs positions présentent des degrés d'appariement proches, on utilise une extrapolation du déplacement du récepteur et au moins deux de ses positions successives, pour sélectionner une position parmi les positions possibles.

Grâce à ces dispositions, le traitement effectué tient compte des positions successives du récepteur et augmente la fiabilité du positionnement.

Selon des caractéristiques particulières, le procédé tel que succinctement exposé ci-dessus comporte une étape de détermination de position approximative par ledit récepteur, à partir des signaux de radionavigation reçus et, au cours de l'étape de traitement, l'information liée au positionnement comporte une information de correction à appliquer à la position approximative déterminée par ledit récepteur.

Grâce à ces dispositions, le récepteur détermine sa position en deux étapes et de manière plus précise.

Selon des caractéristiques particulières, le procédé tel que succinctement exposé ci-dessus comporte une étape de détermination de position approximative par ledit récepteur, à partir des signaux de radionavigation reçus et, au cours de l'étape de traitement, l'information liée au positionnement comporte une information de correction à appliquer à chaque mesure de distance à une source de radionavigation pour corriger la position approximative déterminée par ledit récepteur.

Grâce à ces dispositions, la détermination de la position est plus précise.

Selon des caractéristiques particulières, le procédé tel que succinctement exposé ci-dessus comporte une étape de détermination de position approximative par ledit récepteur, à partir des signaux de radionavigation reçus et, au cours de l'étape de traitement, l'information liée au positionnement comporte une information d'intégrité de la position approximative déterminée par ledit récepteur.

Grâce à ces dispositions, l'utilisateur peut tenir compte de l'intégrité du positionnement.

Selon des caractéristiques particulières, le procédé tel que succinctement exposé ci-dessus comporte une étape de détermination de position approximative par ledit récepteur, à partir des signaux de radionavigation reçus et, au cours de l'étape de traitement, l'information liée au positionnement comporte une information d'intégrité de chaque mesure de distance à une source de radionavigation pour corriger la position approximative déterminée par ledit récepteur, permettant au récepteur de ne pas prendre en compte au moins l'un des signaux de radionavigation reçus et/ou de pondérer l'influence de chacune des mesures de distances dans la détermination de sa position.

Grâce à ces dispositions, la détermination de la position du récepteur peut être rapide, précise et intègre.

Selon des caractéristiques particulières, le procédé tel que succinctement exposé ci-dessus comporte une étape de détermination de position approximative par ledit récepteur, à partir des signaux de radionavigation reçus et, au cours de l'étape de prédiction, les positions terrestres de la pluralité de positions terrestres sont choisies autour de ladite position approximative ou autour d'une précédente position déterminée par l'étape de traitement.

Grâce à ces dispositions, le nombre de positions terrestre à prendre en compte est réduit.

Selon des caractéristiques particulières, une base de données comporte, en regard des positions et des caractéristiques prédites de réception en ces positions, une information représentative d'une plage horaire pendant laquelle les caractéristiques prédites sont considérées comme valables et l'étape de traitement met en oeuvre ladite base de données.

Grâce à ces dispositions, l'étape d'appariement est effectuée avec des caractéristiques prédites qui correspondent à la position réelle des satellites, pendant la plage horaire.

Selon des caractéristiques particulières, au cours de l'étape dé traitement, on traite successivement différentes caractéristiques jusqu'à ce qu'au moins une des caractéristiques mises en oeuvre permette de fournir une information de position au récepteur.

Grâce à ces dispositions, la consommation de ressources est optimisée. Préférentiellement, on traite d'abord les caractéristiques qui demandent le moins de ressources de traitement.

Selon des caractéristiques particulières, lesdites caractéristiques de réception comportent la puissance reçue des signaux reçus par le récepteur.

Selon des caractéristiques particulières, lesdites caractéristiques de réception comportent un ensemble de valeurs caractéristiques des fonctions de corrélation des signaux de radionavigation reçus.

Selon des caractéristiques particulières, lesdites caractéristiques de réception comportent la polarisation des signaux reçus par le récepteur.

Selon des caractéristiques particulières, lesdites caractéristiques de réception comportent le décalage de fréquence des signaux reçus par le récepteur.

Grâce à chacune de ces dispositions, la détermination de la position peut être plus précise et disponible dans des environnements contraints, c'est-à-dire dans des zones ou la couverture des signaux de radionavigation n'est pas suffisante pour déterminer la position par les méthodes classiques.

Selon des caractéristiques particulières, au cours de l'étape de traitement, l'une au moins desdites caractéristiques de réception est utilisée pour déterminer l'état de visibilité de chacune des sources de radionavigation, et cet état de visibilité est utilisé pour déterminer l'information liée au positionnement.

Grâce à ces dispositions, le traitement est rapide.

Selon des caractéristiques particulières, au cours de l'étape de traitement, on détermine la vitesse et la direction du mouvement du récepteur.

Grâce à ces dispositions, les informations de vitesse et de direction du récepteurs peuvent être fournie au récepteur ou utilisées pour une étape de prédictions ultérieure.

Selon un deuxième aspect, la présente invention vise un dispositif de positionnement d'un récepteur de signaux de radionavigation, caractérisé en ce qu'il comporte :

- un moyen de prédiction, pour une pluralité de positions terrestres de caractéristiques de réception de signaux émis par des sources de signaux de radionavigation, en fonction des positions desdites sources, de modèles de propagation d'ondes électromagnétiques et de connaissances topographiques de l'environnement de chaque dite position ;
- un moyen de stockage dans une base de données ;
- un moyen de réception, par ledit récepteur, de signaux de radionavigation ;
- un moyen de mesure de caractéristiques de réception des signaux reçus par ledit récepteur et
- un moyen de traitement des caractéristiques réelles mesurées et des caractéristiques prédites pour fournir une information de positionnement dudit récepteur.

Les avantages, buts et caractéristiques de ce dispositif étant similaires à ceux du procédé tel que succinctement exposé ci-dessus, ils ne sont pas rappelés ici.

D'autres avantages, buts et caractéristiques de la présente invention ressortiront de la description qui va suivre, faite, dans un but explicatif et nullement limitatif, en regard des dessins annexés dans lesquels:

- la figure 1 représente, schématiquement, des éléments mis en oeuvre dans un mode de réalisation particulier de la présente invention ;
- les figures 2A et 2B représentent, sous forme d'un logigramme, des étapes mises en oeuvre par différents éléments illustrés en figure 1, dans un premier mode de réalisation particulier du procédé objet de la présente invention ;
- la figure 3A représente, sous forme d'un logigramme, des étapes mises en oeuvre par différents éléments illustrés en figure 1, dans un deuxième mode de réalisation particulier du procédé objet de la présente invention et
- la figure 3B représente, sous forme d'un logigramme, des étapes mises en oeuvre par différents éléments illustrés en figure 1, dans un troisième mode de réalisation particulier du procédé objet de la présente invention.
- la figure 4 représente un exemple de variation temporelle d'une puissance de signaux reçus lorsqu'un récepteur de navigation capte à la fois ces signaux de manière directe et de manière réfléchie sur un réflecteur fixe ;
- la figure 5 représente, schématiquement, une forme classique d'une fonction de corrélation pour un trajet direct de rayons électromagnétiques provenant de satellites de navigation ;
- la figure 6 représente, schématiquement, une fonction de corrélation résultante qui tient compte de l'influence de tous les rayons provenant d'un même satellite et ayant suivi des trajets différents (multi-trajets) et
- la figure 7 représente l'influence d'une réflexion sur un effet Doppler.

L'invention concerne les dispositifs et procédés permettant l'amélioration des performances des systèmes de radionavigation, par exemple par satellites, par une connaissance de l'environnement du récepteur de navigation et par la modélisation de la propagation des signaux provenant des satellites dans cet environnement. L'environnement du récepteur décrit dans ce brevet comprend les milieux naturels, les milieux urbains et l'intérieur des bâtiments.

Le procédé peut s'appliquer pareillement aux satellites GNSS (acronyme de Global Navigation Satellite System pour système global de navigation par satellites) et à leurs compléments, dits locaux ou globaux, ou sources complémentaires de système de navigation (sources radiofréquences supplémentaires au sols ou dans des aéronefs).

Toute source émettant des signaux radiofréquence et permettant, par mesure de ces signaux, une estimation de distance ou de direction à la source, est considérée dans la présente invention comme une source complémentaire de système de navigation.

L'amélioration des performances de navigation est réalisée grâce à la prédiction des valeurs des caractéristiques de propagation électromagnétiques propres à l'environnement d'un ou plusieurs utilisateurs, puis par traitement des prédictions et les mesures réalisées par l'utilisateur de ces mêmes caractéristiques pour obtenir une information liée au positionnement de l'utilisateur, par exemple sa position, une correction à appliquer à une estimation de sa position et/ou une évaluation de l'intégrité de sa position estimée et/ou de l'intégrité de chaque signal reçu par l'utilisateur.

Le terme "prédiction" est employé ici pour décrire le procédé consistant à pré-calculer les paramètres d'intérêt et à les enregistrer dans une base de données. Ladite prédiction est réalisée par un moyen logiciel incorporant une modélisation de la propagation des ondes électromagnétiques dans l'environnement utile. Ledit moyen logiciel calcule la position des satellites ou de ses sources complémentaires et la propagation des ondes depuis leur source d'émission jusqu'au récepteur de navigation, en tenant compte de l'environnement à considérer.

La position ou d'autres informations de navigation sont déduites des caractéristiques électromagnétiques prédites par le moyen logiciel, d'une part, et mesurées par le récepteur de navigation, d'autre part, grâce à des algorithmes de traitement spatio-temporels.

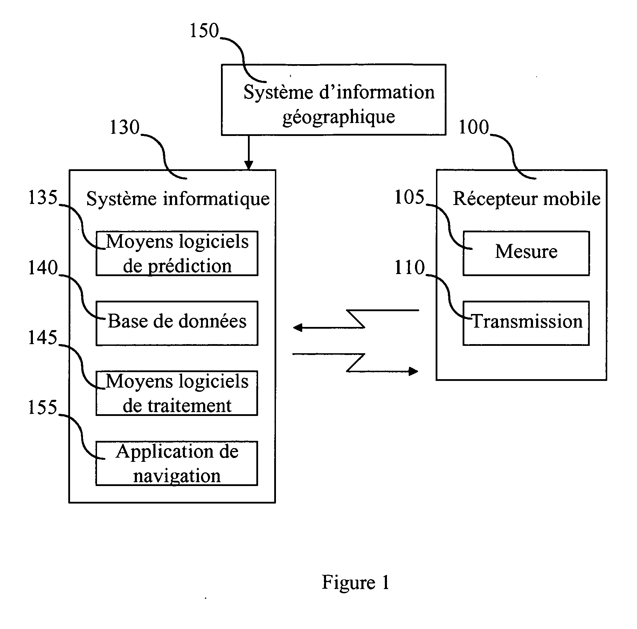

La figure 1 donne une vue d'ensemble des éléments et procédés mis en jeu selon l'invention. On observe, en figure 1, un récepteur 100, un système informatique 130 et un système d'information géographique 150.

Le récepteur de navigation 100 comporte des moyens de réception de signaux de radionavigation et de mesure des caractéristiques 105 de ces signaux, tel que le font les récepteurs de navigation par satellites. La mesure des caractéristiques de réception de signaux reçus, est effectuée à partir des signaux provenant des satellites du système de navigation et, éventuellement, de ses sources complémentaires. Le récepteur 100 dispose également de moyens de transmission 110 des paramètres mesurés, caractéristiques de la propagation des signaux pour au moins une des sources du système de navigation à destination du système informatique 130.

En variante, la détermination des informations particulières en fonction des mesures effectuées est réalisée par le système informatique 130 (par exemple, par une base de données et des moyens logiciels de traitement décrits plus loin).

Le système informatique 130 comporte des moyens logiciels de prédiction 135, une base de données 140, des moyens logiciels de traitement 145 et une application de navigation 155.

Les moyens logiciels de prédiction 135 effectuent une prédiction des valeurs des caractéristiques de réception, pour une pluralité de positions terrestres. Ces valeurs prédites sont mises en mémoire dans la base de données 140. Les moyens logiciels de traitement 145 traitent les mesures réelles effectuées par le récepteur et les mesures prédites pour fournir une information liée au positionnement du récepteur 100, à ce récepteur et/ou à l'application de navigation 155.

Les méthodes relatives à la mesure des informations caractéristiques de réception sont décrites ci après, à titre d'exemple et d'explication, sans pour autant réduire à ces méthodes le champ d'application de l'invention.

La position du récepteur 100 peut être l'une des caractéristiques de réception mises en oeuvre par le système informatique 130. De même, l'estimation de distance à chacune des sources de signaux de navigation peut être l'une des caractéristiques de réception mises en oeuvre par le système informatique 130.

Une autre caractéristique de réception, la puissance reçue des signaux provenant d'un satellite peut être déterminée par la mesure de l'énergie électrique parcourant les canaux en phase (I) et en quadrature de phase (Q) du récepteur de navigation 100, et ramenée au temps d'observation de cette énergie. On parle en général de mesure du rapport signal à densité de bruit C/No, lorsque la mesure d'énergie est réalisée en amont et en aval des corrélateurs et dans des bandes de filtrage différentes. Cette mesure de puissance reçue est généralement effectuée par les récepteurs de navigation connus, afin de surveiller l'acquisition ou la poursuite de chaque signal satellite. En effet, dans certains récepteurs de type connu, la puissance reçue déduite de ce rapport signal à densité de bruit peut servir à pondérer l'influence, dans l'algorithme de positionnement, de chaque mesure de pseudo-distances entre le récepteur et un satellite.

Pour la mise en oeuvre de la présente invention, les résultats de mesure concernent les caractéristiques de propagation ou de réception qui peuvent être prédites en fonction de la connaissance de l'environnement du récepteur et la modélisation des phénomènes de propagation dans cet environnement. La puissance reçue sur chaque canal du récepteur (pour chaque satellite ou source de navigation) est notamment caractéristique de la propagation des ondes depuis la source jusqu'au récepteur. En variantes, des valeurs seuils sont utilisées pour représenter les caractéristiques de la propagation. Par exemple, on utilise une valeur seuil pour déterminer si les signaux reçus d'une source de signaux de navigation sont reçus de manière directe (en ligne de vue) ou bien après un phénomène de propagation particulier (réflexion, propagation à travers un matériaux, diffraction). La réception en ligne directe des signaux provenant de satellites est particulièrement pertinente dans le cadre de la présente invention. Cette notion peut être utilisée par les moyens logiciels de traitement, comme premier élément caractéristique de la propagation, de par sa simplicité de mise en oeuvre à la fois dans les moyens de mesure ou dans les moyens logiciels d'un système informatique (voir plus loin).

La variation de la mesure de puissance reçue d'un signal provenant d'un satellite est également utilisée. Lorsque le canal de propagation implique des réflexions ou des diffractions, on observe, en effet, une variation périodique de la puissance mesurée, cette variation pouvant être à la fois temporelle et spatiale. La mesure de cette variation donne donc une information sur la propagation des signaux, et peut notamment permettre de déterminer la présence de trajets réfléchis perturbant la mesure de navigation.

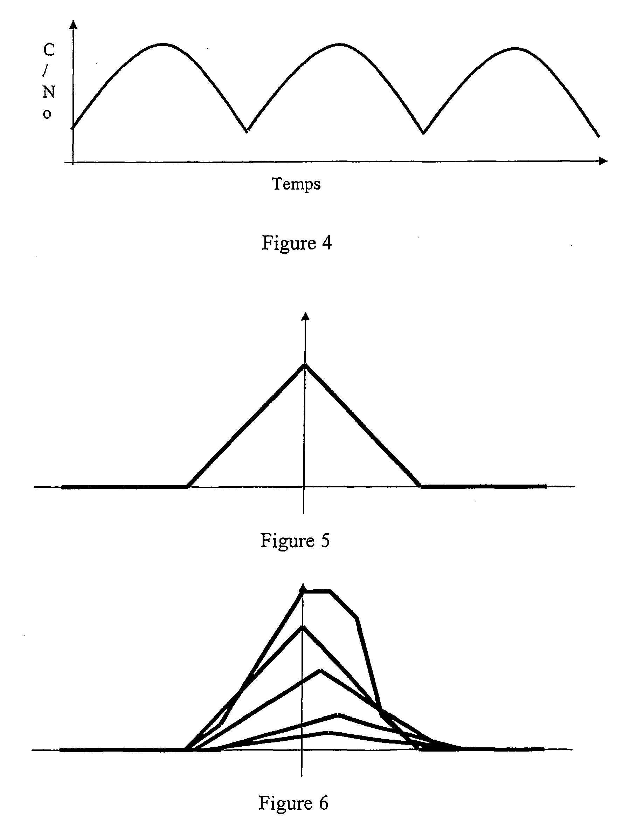

La figure 4 représente un exemple de variation de la puissance en fonction du temps lorsque le récepteur de navigation capte à la fois un satellite de manière directe mais aussi de manière réfléchie sur un réflecteur fixe. La mesure de l'amplitude de variation, et/ou la forme de la variation spatiale ou temporelle, sont des caractéristiques qui peuvent être fournies par les moyens de mesure 105.

Les mesures de distance réalisées dans un système de navigation par satellites sont basées sur une synchronisation du code de navigation émis par chaque satellite avec une réplique générée par le récepteur. On utilise en particulier le principe de la corrélation temporelle et un discriminateur de code, permettant de mesurer un décalage de phase de code et d'utiliser cette mesure dans des boucles de poursuites qui assurent la synchronisation du code avec sa réplique. Ce processus est généralement décrit à l'aide d'une fonction de corrélation.

La figure 5 précise la forme classique de cette fonction de corrélation (dans le cas classique d'utilisation du code C/A d'un satellite de type GPS). L'erreur induite par les phénomènes de multi-trajets peut être prédite par l'étude de la déformation de la fonction de corrélation. Chaque rayon provenant d'un satellite admet un délai et une puissance caractéristique des phénomènes de propagation qu'il a subi. On peut alors tracer la fonction de corrélation résultante, qui tient compte de l'influence de tous les rayons provenant d'un même satellite et ayant suivi un trajet différent. Un exemple d'une fonction de corrélation caractéristique des multi-trajets est représenté en figure 6 (la courbe du haut est la résultante des fonctions de corrélation caractéristiques de chaque rayon). On peut observer la déformation de la fonction de corrélation due à l'influence de signaux présentant un retard et une atténuation ou gain par rapport au trajet direct.

Les moyens de mesure 105 mesurent la valeur de cette fonction de corrélation en quelques points ou, dans le cas de récepteurs dits « multi corrélateurs » ou de récepteurs utilisant un principe d'acquisition par FFT (acronyme de "Fast Fourier Transform" pour "transformée de Fourier rapide"), on trace la fonction de corrélation dans son ensemble. La forme de cette fonction de corrélation étant largement liée aux phénomènes de propagation, cette mesure est particulièrement adaptée à la présente invention, permettant une comparaison pertinente de la mesure avec les prédictions.

La polarisation des ondes est également une caractéristique de la propagation. Les ondes des systèmes de navigation classiques sont émises par les satellites en polarisation circulaire droite. Une onde reçue en direct admet donc cet état de polarisation, alors qu'une onde ayant subi des réflexions, transmissions ou diffractions admet une polarisation différente, elliptique droite ou gauche. Les moyens de mesure 105 utilisent des procédés de mesure de l'état de polarisation décrits dans l'art antérieur et basés sur l'utilisation de plusieurs antennes admettant des polarisations différentes, généralement circulaires droite et gauche, ou deux antennes en polarisation linéaire orientées différemment.

Le décalage en fréquence (effet "Doppler") de chaque satellite dépend de la vitesse relative du satellite et du récepteur, sur l'axe satellite - récepteur. On peut décomposer le décalage Doppler en deux termes :

```
DopplerTotal = DopplerRécepteur + DopplerSatellite
```

Le premier terme correspond à l'influence du déplacement du récepteur 100, et le deuxième à l'influence du déplacement du satellite. La mesure du décalage Doppler, effectuée dans le récepteur par la boucle de poursuite de phase, permet donc l'estimation d'une information sur la vitesse du récepteur mobile.

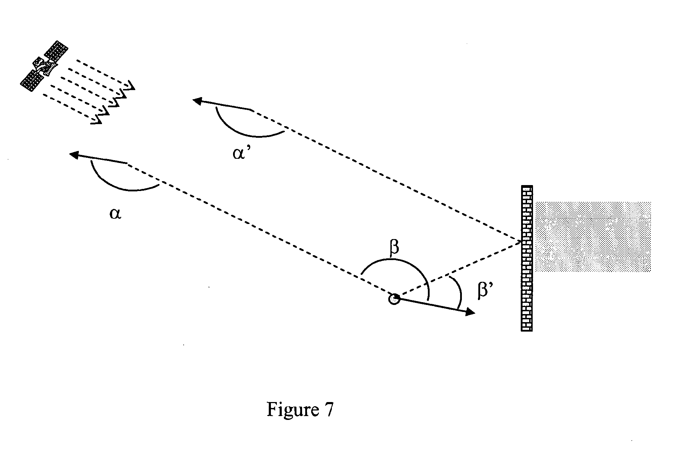

Dans un environnement caractérisé par des multi-trajets, la mesure de l'effet Doppler récepteur est cependant faussée. Le décalage Doppler d'un signal réfléchi correspond en effet à la vitesse relative du récepteur sur l'axe de propagation à l'arrivée du signal sur l'antenne. Suivant la position du point de réflexion, la mesure du Doppler peut donc apporter une information faussée pour le calcul de la vitesse du mobile. Ce principe est illustré par la figure 7.

Sur le cas typique de la réception d'un multi-trajet représenté en figure 7, on se rend compte de la différence de calcul de Doppler sur le trajet direct et sur le trajet réfléchi. Pour le trajet direct, on a :

$$\Delta f_d = \frac{v_{sat}}{\lambda}\cos\alpha + \frac{v_{mob}}{\lambda}\cos\beta$$

Pour le trajet réfléchi :

$$\Delta f_d' = \frac{v_{sat}}{\lambda}\cos\alpha' + \frac{v_{mob}}{\lambda}\cos\beta'$$

Ainsi, suivant que la mesure est réalisée sur le trajet direct ou sur le trajet réfléchi, l'écart de décalage Doppler est lié à la vitesse du récepteur mobile et à l'angle formé entre ce vecteur vitesse et la direction d'incidence du trajet réfléchi.

Les paramètres caractéristiques de la réception ou de la propagation de signaux électromagnétiques comportent :

- la position du récepteur, estimée par le récepteur,
- la distance du récepteur à chaque source de signaux de radionavigation, estimée, par le récepteur,
- la puissance reçue des signaux ou la variation de cette puissance,
- la fonction de corrélation des codes de navigation,
- la polarisation des ondes électromagnétiques pénétrant l'antenne du récepteur de navigation,

- le décalage en fréquence ou phase porteuse (effet doppler, effets de propagation, ...) de chaque signal et/ou
- toute autre information caractéristique de la propagation de signaux

Parmi les récepteurs de navigation par satellites envisagés, on peut citer de manière non exhaustive les récepteurs GPS (acronyme de Global Positionning System, marque déposée, pour système de positionnement global), les récepteurs incorporant la réception des satellites géostationnaires d'augmentation de type SBAS (acronyme de Satellite Based Augmentation System, pour système d'augmentation satellitaire), par exemple système EGNOS (marque déposée, acronyme de European Geostationary Navigation Overlay Service pour service géostationnaire Européen de « recouvrement » de la navigation) ou WAAS (marque déposée, acronyme de Wide Area Augmentation System pour systèmes d'augmentation large zone), les récepteurs du système de navigation GLONASS (marque déposée, acronyme de GLObal NAvigation Satellite System pour système mondial de navigation par satellites, prochainement du système de navigation Galileo, ou encore des récepteurs compatibles utilisant une combinaison de ces systèmes de navigation par satellites ou tout autre système de navigation par satellite présent ou futur. Le récepteur de navigation peut également traiter des signaux de navigation provenant de systèmes radiofréquence d'augmentation locale ou d'autres moyens de radio navigation (utilisation de pseudolites, LORAN -marque déposée, acronyme de Long RAnge Navigation, pour navigation longue portée-, ...).

Un système informatique 130 met en oeuvre des moyens logiciels de prédiction 135, une base de données 140 et des moyens logiciels de traitement 145.

Les moyens logiciels de prédiction 135 prédisent la valeur ou l'état d'un certain nombre de paramètres caractéristiques de la propagation, pour au moins un instant donné et pour une pluralité de positions terrestres. Par exemple, les positions pour lesquelles la prédiction est effectuée se retrouvent sur un maillage régulier, à maille carrée ou triangulaire, de cinq mètres de pas.

Les paramètres prédits correspondent aux paramètres transmis par le récepteur de navigation. Par exemple, le deuxième terme de l'effet Doppler peut être prédit par la prise en compte de la trajectoire des satellites, à partir des éphémérides ou almanachs diffusés dans le message de navigation des systèmes de navigation par satellites. La mesure du décalage Doppler de chaque satellite dépend donc des phénomènes de propagation, et peut être utilisé, selon la présente invention, pour un traitement des mesures Doppler réelles et les valeurs de Doppler prédites. La mesure peut en particulier permettre de détecter la réception d'un trajet réfléchi, information pertinente pour des moyens logiciels de traitement 145. Les moyens logiciels de traitement peuvent également permettre la correction d'une estimation de la vitesse du mobile basée sur des mesures Doppler par prédiction de l'influence de multi-trajets en fonction de la position et de l'orientation des réflecteurs considérés.

D'une manière générale, la prédiction effectuée par les moyens logiciels de prédiction 135 est basée sur une modélisation physique des phénomènes de propagation des ondes électromagnétiques telles que celles utilisées par les systèmes de navigation par satellites. Cette modélisation peut utiliser des modèles statistiques ou déterministes. Parmi les méthodes déterministes, les moyens logiciels de prédiction 135 peuvent utiliser des modèles reposant sur la théorie de l'otique géométrique et les théories de la diffraction (théorie uniforme de la diffraction, théorie physique de la diffraction). Toute autre théorie concernant la modélisation de la propagation des ondes électromagnétiques peut être utilisée par l'invention. Le système informatique 130 est alimenté par des informations provenant d'un système d'information géographique et de modélisation de l'environnement à traiter 150 et fournit la base de données 140 en caractéristiques électromagnétiques de réception des signaux satellites dans l'environnement traité prédites pour au moins une plage horaire et une pluralité de positions terrestres.

Le terme "prédiction" est ici employé pour décrire l'ensemble des calculs de propagation réalisés par le moyen logiciel de prédiction 135. On parle de "prédiction" puisque, conformément à la présente invention, les calculs de propagation sont réalisés au préalable dans la zone d'intérêt de l'application (zone urbaine, bâtiment particulier...), pour être stockés dans la base de données 140 en fonction de positions à venir des sources de signaux électromagnétiques. En mettant en oeuvre ces prédictions, la présente invention résout et simplifie les problèmes liés aux ressources disponibles pour réaliser les calculs.

La réalisation d'un procédé de prédiction d'une caractéristique de réception à partir d'une modélisation de l'environnement est classique pour l'homme du métier. On trouvera par exemple la description d'un tel procédé pour la prédiction du rapport C/N précédemment évoqué dans l'article de Yongcheon suh et al. intitulé « Evaluation of multipath error and signal propagation in complex 3D urban enviroments for GPS multipath identification», publié dans le compte-rendu de la conférence ION GNSS 17th International meeting of the satellite division, 21-24 Sept. 2004, pages 1147-1156.

Les prédictions ont une résolution temporelle, une plage horaire de validité, choisie telle que les informations enregistrées dans la base de données 140 puissent rester valides à chaque instant auquel le traitement est réalisé par les moyens logiciels de traitement 145. L'évolution des prédictions dépend largement de l'évolution de la position des satellites par rapport à la zone contenant les mobiles. Ainsi, il est possible de choisir une résolution temporelle des prédictions relativement faible (de l'ordre de quelques minutes de période, c'est-à-dire de durée de la plage horaire de validité) en admettant que durant cette période les informations prédites relatives à la propagation des signaux provenant des satellites ont peu évolué. L'optimisation de cette résolution temporelle des prédictions permet de réduire sensiblement les ressources de calcul nécessaires aux moyens logiciels de prédiction 135.

De plus, le mouvement des satellites étant cyclique et possédant sensiblement la même période de rotation autour de la terre, les mêmes prédictions sont valides pour plusieurs cycles successifs de configuration de la constellation de satellites. Par exemple, le cycle correspond à 23h56 pour GPS et à environ 3 jours pour Galileo. Cependant ce cycle est théorique et il peut y avoir des déformations. On réduit ainsi les ressources de calculs nécessaires aux prédictions. Cependant, il est préférable de renouveler les prédictions aussi souvent que possible, en fonction des ressources disponibles.

La résolution spatiale (le pas entre deux positions terrestres étudiées) des données contenues dans la base de données 140 est choisie en fonction de l'application et des performances désirées de précision de positionnement, ainsi que des ressources disponibles pour le calcul et pour le stockage de ces données.

Un moyen de réduire l'espace mémoire nécessaire au stockage des données est de réduire le nombre de positions terrestres pour lesquelles une prédiction est effectuée. Pour donner un exemple explicatif, le principe de l'algorithme de traitement effectué par les moyens logiciels de traitement 145 pourrait être de déterminer parmi les points de la base de données 140 ceux qui sont potentiellement des solutions de positionnement (points pour lesquels la correspondance entre les caractéristiques prédites et les caractéristiques réelles mesurées est élevée). Il s'agit ainsi de réduire le nombre de points possibles à considérer, ce qui peut permettre de réduire également la mise à jour des prédictions à ces points (notamment lorsque les prédictions sont mises à jours en quasi temps réel en fonction des résultats de traitement). Cette méthode permet de réduire les ressources de calculs nécessaires à la prédiction.

Parmi les informations prédites et stockées, on trouve toutes les caractéristiques de propagation ou de réception de signaux utiles aux moyens logiciels de traitement 145, c'est-à-dire toutes ou une partie des caractéristiques qui sont également mesurées par le récepteur de navigation 100. On conserve également, dans la base de données, des informations statistiques ou probabilistes permettant d'estimer la validité de chaque mesure de pseudo distance ou mesure Doppler, afin de pondérer au mieux leur prise en compte par les moyens logiciels de traitement 145.

Un système d'information géographique (SIG) 150 fournit aux moyens logiciels de prédiction 135 une modélisation topographique de l'environnement d'une pluralité de positions terrestres. Le terme "environnement" inclut ici tous les éléments physiques (discontinuités de relief naturel ou constructions humaines) se trouvant dans une zone entourant les positions terrestres considérées. La modélisation de l'environnement est préférentiellement réalisée à l'aide de modèles numériques en trois dimensions (modèles 3D ou éventuellement 2,5D), qui sont particulièrement adaptés aux modèles de propagation envisagés tels que les modèles utilisant le lancé et le tracé de rayons (ray tracing)

La base de données 140 conserve un ensemble de caractéristiques électromagnétiques de réception des signaux satellitaires et de ceux de leurs sources complémentaires, pour chaque position terrestre référencée dans la base de données, ou un ensemble préférentiel de positions terrestres, déterminé à partir des résultats précédents de traitement par les moyens logiciels de traitement 145, et préférentiellement, pour une multitude de plages horaires à venir.

Les moyens logiciels de traitement 145 mettent en oeuvre les caractéristiques de réception ou de propagation mesurées par le récepteur et le contenu de la base de données 140 pour déterminer au moins une position possible du récepteur, en fonction d'une estimation de position fournie par le récepteur, soit en fonction des signaux reçus, soit en fonction des précédentes positions du récepteur, soit en fonction d'une combinaison des deux.

Dans des variantes, au cours de l'étape de traitement, les moyens logiciels de traitement 145 déterminent l'état de visibilité du récepteur, c'est-à-dire la visibilité en ligne directe (sans masquage), la visibilité indirecte (le signal provenant d'un satellite est reçu malgré un masquage), ou encore l'absence de signal reçu pour chacun des satellites de la constellation.

Dans le cas où le récepteur est capable de fournir une estimation de sa position, en fonction des signaux électromagnétiques qu'il reçoit, les moyens logiciels de traitement ne recherchent les positions possibles, dans la base de données, qu'en des positions se trouvant à proximité de la position estimée par le récepteur. Les prédictions suivantes peuvent éventuellement être réalisées uniquement en ces points, de manière à limiter les ressources de calcul.

Dans le cas où le récepteur n'est pas capable de fournir une estimation de sa position en fonction des signaux électromagnétiques qu'il reçoit, le récepteur fournit au moins une position précédemment occupée par ce récepteur et, par interpolation, les moyens de traitement déterminent une position estimée du récepteur et ne recherche les positions possibles, dans la base de données, qu'en des positions se trouvant à proximité de la position estimée par le récepteur. En variante, le système informatique comporte un moyen de mémorisation des positions successives du récepteur, pour utiliser des informations de déplacement dans le procédé de traitement appliqué par les moyens logiciels de traitement 145. Préférentiellement, ces positions ne sont pas stockées dans la base de données 140, qui comporte alors uniquement les prédictions, mais dans une autre base de données d'exploitation.

En fonction de ces positions possibles, les moyens logiciels de traitement 145 déterminent la position la plus probable, soit par interpolation entre des facteurs de corrélation des caractéristiques en ces positions possibles et les caractéristiques mesurées, soit par interpolation des positions successivement occupées par le récepteur.

Les moyens logiciels de traitement 145 peuvent être basés sur une large variété de méthodes mathématiques utilisant des modèles probabilistes de type Bayésien (filtres de Kalman, modèles de « Hidden Markov », grille de probabilité, filtrage particulaire, réseaux de neurones ...), des modèles basés sur l'interpolation polynomiale, sur la logique d'état, ou encore une combinaison de ces méthodes.

Comme on l'a dit l'étape de traitement a pour but d'obtenir à partir des caractéristiques de réception mesurées et celles prédites, la position la plus probable du récepteur. Pour ce faire, l'étape de traitement détermine en une pluralité de points définissant une grille, correspondants aux positions possibles de l'utilisateur, la probabilité que chaque point corresponde à la position réelle du récepteur, compte tenu des informations *a priori* (caractéristiques prédites stockées dans la base de données 140) et des caractéristiques mesurées.

Un exemple d'implémentation de l'algorithme de traitement est donné ci-dessous :

A partir des caractéristiques mesurées, par exemple les rapports signal à bruit relatifs aux signaux reçus des différents satellites, les probabilités *a posteriori* de visibilité en ligne directe (LOS) de ces satellites sont déterminées. On obtient ainsi un vecteur de probabilités relatif au récepteur en un instant donné, appelé état de visibilité a *posteriori.* D'autre part, la base de données 140 fournit soit directement soit au moyen d'un calcul préalable à partir des caractéristiques prédites, les vecteurs de probabilité a *priori* ( ou états de visibilité a *priori*) des différents points de la grille précitée. Les différences entre les états de visibilité a *priori* et a *posteriori* donnent les probabilités de position du récepteur en les différents points de la grille, en d'autres termes une grille de probabilités dans laquelle il est aisé d'extraire par simple comparaison la position la plus probable.

Afin de réduire l'erreur d'estimation, il est possible d'obtenir plusieurs grilles de probabilité correspondant à des types d'état différents, puis d'effectuer la comparaison sur la grille résultante.

Bien que l'algorithme de traitement présenté plus haut fournisse la position du récepteur, il peut de manière générale fournir des informations de navigation, à savoir cumulativement ou alternativement :

- la position du récepteur ou une zone de localisation
- la vitesse du récepteur
- la direction du mouvement

Ces informations peuvent ensuite être utilisées pour permettre une application de navigation, ou bien transmises au récepteur de manière à optimiser les traitements des signaux propres au récepteur de navigation. En effet, les récepteurs réalisent un certain nombre de traitements des signaux satellites reçus, par exemple pour synchroniser des boucles de poursuites sur le signal, et cette synchronisation est facilitée par une connaissance, même approximative, de la position du récepteur. La position déterminée par le moyen de traitement est donc une information utile au récepteur de navigation, en particulier lorsque le récepteur de navigation ne dispose pas de suffisamment de mesures pour déterminer un positionnement de manière autonome. D'autres types d'informations mises en forme par les moyens logiciels de prédiction, tel que l'état de visibilité ou de masquage d'un satellite donné dans une zone environnant la position du récepteur de navigation, peuvent être utilisées pour améliorer les traitements des signaux. Les récepteurs typiques réalisent en permanence une recherche temps fréquence des signaux provenant de satellites non déjà poursuivis. Une connaissance a priori, fournie par l'étape de traitement de la présente invention, de la non disponibilité des signaux provenant d'un satellite donné (à des niveaux de puissance suffisants) dans une zone environnant le récepteur, permet de concentrer les ressources de calcul sur les autres satellites potentiellement recevables, améliorant ainsi le temps d'acquisition de ces satellites, et diminuant la consommation du récepteur de navigation.

En variante, lorsque que l'application met en oeuvre plusieurs systèmes de navigation indépendants, les moyens logiciels de traitement peuvent déterminer, à partir des prédictions, le niveau de performances associé a chacun des systèmes de navigation. Ils peuvent alors fournir au récepteur de navigation cette information qualitative, conduisant la stratégie de traitement des signaux dans le récepteur de navigation. Par exemple, si un des systèmes considérés est un système satellitaire tel que le GPS, et qu'un autre système de positionnement, basé sur la réception de sources basées au sol (par exemple des pseudolites), est utilisable par le récepteur, les moyens logiciels de traitement peuvent fournir une information au récepteur indiquant le système offrant les meilleures performances de positionnement en fonction de sa position préalablement déterminée

Dans le mode de réalisation décrit et représenté, des moyens logiciels de navigation 155 implémentent l'application de navigation. Ils utilisent à la fois les informations de navigation fournies par les moyens logiciels de traitement 145 et la base de données 140 concernant l'environnement. Il permet ainsi de représenter, par exemple sur un écran (non représenté) du récepteur de navigation 100, la position de chaque utilisateur d'un dispositif conforme à la présente invention, dans son environnement en trois dimensions.

Les moyens logiciels de traitement 145 sont basés sur une comparaison des caractéristiques prédites conservées dans la base de données 140 avec les caractéristiques de propagation ou de réception mesurées par le récepteur de navigation. L'objectif des moyens logiciels de traitement 145 est de fournir un ensemble de positions possibles, ou idéalement la position la plus probable, pour chaque récepteur mobile 100 mettant en oeuvre la présente invention.

Le traitement effectué par le moyen logiciel de traitement 145 porte sur un certain nombre d'informations caractéristiques de la réception des signaux provenant des satellites. Ces informations sont rangées dans un vecteur d'états. Chaque paramètre d'état considéré est déterminé à partir des caractéristiques mesurées.

Les caractéristiques décrivant le vecteur d'état sont données satellite par satellite et contiennent notamment : la visibilité directe, la visibilité après réflexion, le rapport signal à bruit, la fonction de corrélation, les mesures de pseudo-distances, les mesures de doppler et l'étude de la polarisation.

Plusieurs instants de mesures peuvent être utilisés par l'algorithme de traitement appliqué par les moyens logiciels de traitement 145, de manière à évaluer la variation temporelle de chacun des paramètres. Par exemple, une modification sensible d'une caractéristique mesurée d'un instant de mesure à un autre est une information utile au traitement (par exemple, perte ou acquisition d'un satellite).

La visibilité directe ou indirecte peut être déterminée à partir d'une ou plusieurs informations mesurées par le récepteur de navigation. On peut l'estimer en mesurant le rapport signal à bruit ou la variation de ce rapport, à partir de la polarisation de l'onde reçue, ou encore en étudiant la valeur du décalage Doppler mesuré et la variation temporelle de ce décalage. Par ailleurs, la présence d'un multi-trajet dégradant la mesure du trajet direct peut être détectée par observation de la fonction de corrélation.

Les paramètres de visibilité ont une importance considérable pour les moyens logiciels de traitement 145. Ils permettent en effet de réduire sensiblement l'espace des positions possibles pour des coûts de calcul minimes. En effet, selon l'invention, une conception hiérarchisée du traitement permet d'utiliser au mieux les informations à comparer. Un exemple d'organisation hiérarchisée de fonctionnement des moyens logiciels de traitement 145 est donné ci-dessous :

- on utilise, dans un premier temps, les mesures et prédictions de visibilité directe et indirecte des satellites, de manière à considérablement réduire la zone de solutions de positionnement possibles à celles pour lesquelles l'état de visibilité des satellites coïncide avec les prédictions. On peut alors réduire le traitement à cette zone de cohérence de la visibilité. Selon le nombre de satellites disponibles, on utilise ensuite les autres mesures du type mesure de la fonction de corrélation, mesure de puissance, mesures de décalage doppler, et variation temporelle de ces mesures, de manière à réduire la zone de traitement ou simplement à associer, à chaque position terrestre de la zone de traitement, une valeur de type probabiliste traduisant la qualité du traitement entre les mesures et les prédictions.
- les mesures de type pseudo-distances et doppler sont alors utilisées pour préciser le positionnement dans une zone réduite de cohérence du traitement. Dans la zone de traitement, on peut préciser le poids probabiliste associé à chaque point par une mesure de cohérence entre les mesures de pseudo distance, la distance réelle de ces points aux satellites, et les mesures de pseudo-distances prédites (les prédictions incluant une estimation des erreurs de type biais ou variance des mesures).

Selon l'invention, les informations découlant des prédictions peuvent en effet être appliquées à différents niveaux dans les processus algorithmiques de positionnement :

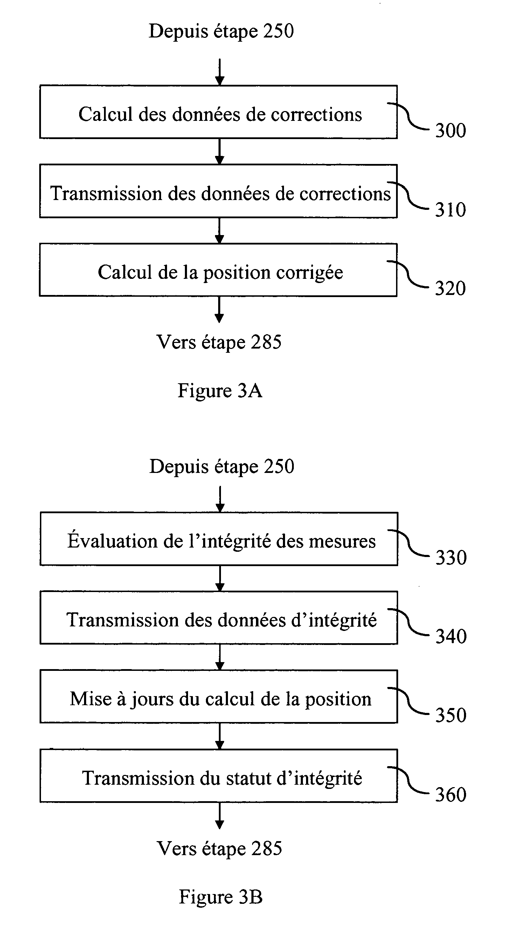

- les résultats du traitement effectué par les moyens logiciels de traitement 145 peuvent être utilisés pour réduire l'espace des solutions possibles et ainsi améliorer les performances de navigation en terme de précision. (Comme exposé ci-dessus en regard des figures 1 à 7 et ci-dessous, en regard des figures 3A et 3B) ;
- les informations de prédictions peuvent être utilisées pour corriger ou pondérer l'utilisation de chaque mesure de pseudo-distance, afin d'améliorer la précision du positionnement. En effet, lorsque suffisamment de signaux de radionavigation sont disponibles, un récepteur classique de radionavigation calcule sa position selon un procédé de triangulation basé sur des mesures de distances entre le récepteur et chaque satellite. Ces mesures sont appelées « pseudo-distances ». Ces mesures sont détériorées par les phénomènes de propagation. Le récepteur peut fournir au système informatique ces mesures de pseudo-distances, étape 245. Selon le deuxième mode de réalisation, illustré en figure 3A, la prédiction des phénomènes de propagation permet d'évaluer, pour chaque source de radionavigation, l'erreur de mesure correspondante. Les corrections à appliquer sont alors calculées par le système informatique, étape 300 et transmises au récepteur de navigation, étape 310. Les corrections sont prises en compte par le récepteur pour corriger son estimation de la position, étape 320, selon les procédés de correction différentielle connus dans l'art.
- les informations de prédiction des phénomènes de propagation peuvent permettre de prédire des erreurs importantes dans la mesure par le récepteur des pseudo-distances. Ainsi, dans le troisième mode de réalisation, illustré en figure 3B, pour chacune des mesures, une information d'intégrité de cette mesure est déterminée, étape 330, en fonction des prédictions et des mesures de caractéristiques réelles effectuées par le récepteur. Ces données d'intégrité sont alors transmises au récepteur, étape 340. On observe, que l'information d'intégrité transmise au récepteur peut être globale, pour la position déterminée par le récepteur ou par signal provenant de chaque source de signaux de radionavigation. Selon des procédés connus dans le cadre des systèmes d'augmentation déjà évoquées comme des systèmes WAAS et EGNOS, ces informations d'intégrité de chaque mesure sont utilisées par le récepteur, soit pour choisir d'utiliser ou non une mesure dans les algorithmes de positionnement, étape 350, (si le nombre de mesures est important et permet de ne pas considérer certaines d'entres elles), soit pour pondérer l'influence de chacune des mesures dans la détermination de la position, étape 350 (cas typique d'une triangulation par des algorithmes de type moindres carrés pondérés) ou encore pour transmettre à l'utilisateur du système le statut d'intégrité de la position calculée, étape 360.

On peut envisager aussi d'utiliser la position précise obtenue par l'étape de traitement pour réduire le temps d'accrochage du récepteur dans le cas de perte de satellites : Il y a un lien entre positon du récepteur et performance d'acquisition des signaux (temps d'acquisition). Une estimation de la position permet d'optimiser les traitements du récepteur.

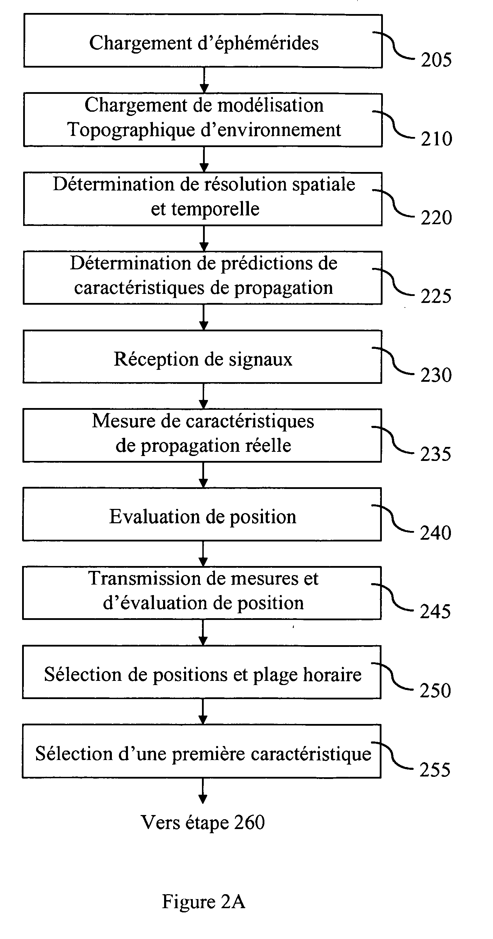

On observe, en figure 2A, une étape préliminaire 205 de chargement, dans le système informatique, des éphémérides des satellites. Puis, au cours d'une étape préliminaire 210, on charge, dans le système informatique, depuis le système d'information géographique, la modélisation topographique d'une pluralité de positions terrestres, par exemple les zones urbaines et montagneuses, d'une région d'utilisation du procédé objet de la présente invention.

Puis, au cours d'une étape préliminaire 220, on détermine la résolution spatiale et la résolution temporelle des prédictions. Ces résolutions peuvent être différentes selon les zones de la région d'utilisation : par exemple, dans les plus grandes villes ou en montagne, pour tenir compte d'une plus forte probabilité de perturbation de propagation d'ondes satellitaires, on augmente la résolution spatiale et la résolution temporelle.

Puis, au cours d'une étape préliminaire 225, on détermine les prédictions de caractéristiques de propagation ou de réception pour chaque satellite et pour chaque source complémentaire, pour chaque position terrestre et pour chaque plage horaire déterminées au cours de l'étape 220, en fonction des informations topographiques fournies par le système d'information géographique.

Au cours d'une étape 230, un récepteur reçoit des signaux électromagnétiques de la part de satellites et de sources complémentaires.

Au cours d'une étape 235, le récepteur détermine les caractéristiques de propagation ou de réception des signaux de chaque source, satellites et sources complémentaires.

Au cours d'une étape 240, le récepteur évalue sa position en fonction des signaux reçus ou en fonction de ses plus récentes positions, vitesses et directions de déplacement, par interpolation. En variante, c'est le système informatique qui effectue cette interpolation.

Au cours d'une étape 245, le récepteur transmet au système informatique l'évaluation de sa position et les caractéristiques de propagation ou de réception des signaux reçus.

Au cours d'une étape 250, le système informatique effectue une sélection des positions terrestres de la base de données et la plage horaire à examiner. Les positions terrestres à examiner sont les positions terrestres proches de la position évaluée par le récepteur.

Au cours d'une étape 255, le système informatique sélectionne une première caractéristique de transmission ou de propagation à examiner.

Les caractéristiques mises en oeuvre, source par source, comportent notamment : la visibilité directe, la visibilité après réflexion, le rapport signal à bruit, la fonction de corrélation, les mesures de pseudorange, les mesures de doppler et l'étude de la polarisation.

On utilise, dans un premier temps, les mesures et prédictions de visibilité directe et indirecte des satellites, de manière à considérablement réduire la zone de solutions de positionnement possibles à celles pour lesquelles l'état de visibilité des satellites coïncide avec les prédictions. On utilise ensuite les autres caractéristiques, mesure de la fonction de corrélation, mesure de puissance, mesures de décalage doppler, et variation temporelle de ces mesures

Les mesures de type pseudo-distance et doppler sont utilisées ensuite pour préciser le positionnement du récepteur dans une zone réduite de cohérence du traitement effectué par les moyens logiciels de traitement 145. Dans la zone de cohérence, on peut préciser le poids probabiliste associé à chaque point par une mesure de cohérence entre les mesures de pseudo distance, la distance réelle de ces points aux satellites, et les mesures de pseudo-distances prédites.

On observe que l'ordre d'utilisation des mesures ou caractéristiques, tel que décrit ci-dessus, n'est donné qu'à titre d'exemple explicatif.

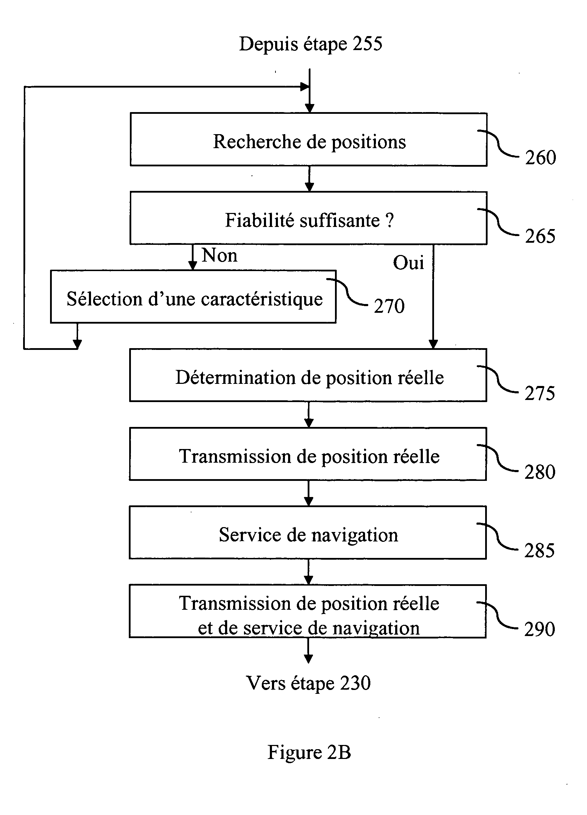

Au cours d'une étape 260 (figure 2B), le système informatique effectue une recherche, parmi les positions terrestres sélectionnées et pour la plage horaire sélectionnée, des positions terrestres qui possèdent, pour la caractéristique à examiner, une valeur proche de celle mesurée par le récepteur.

Au cours d'une étape 265, le système informatique détermine si la fiabilité des positions terrestres déterminées au cours de l'étape 255 est supérieure à une valeur seuil.

Si oui, le système informatique passe à l'étape 275. Sinon, au cours d'une étape 270, le système informatique sélectionne une nouvelle caractéristique de propagation ou de réception à examiner, dans l'ordre indiqué en regard de l'étape 255, et retourne à l'étape 260.

Au cours de l'étape 275, le système informatique détermine la position réelle du récepteur, sa vitesse et la direction de son mouvement en fonction :

- des positions possibles déterminées au cours de l'étape 260 ;
- des positions récentes du récepteur ;
- des écarts entre les valeurs de la caractéristique examinée pour les points possibles et la valeur déterminée par le récepteur pour cette même caractéristique.

En fonction des positions possibles, les moyens logiciels de traitement 145 déterminent une seule position probable, soit par interpolation entre des facteurs de corrélation des caractéristiques en ces positions possibles et les caractéristiques mesurées, soit par interpolation des positions successivement occupées par le récepteur, en tenant compte de sa vitesse et de la direction de son mouvement.

Puis, au cours d'une étape 280, le système informatique transmet la position réelle du récepteur, sa vitesse et la direction de son mouvement à une application de navigation.

Au cours d'une étape 285, l'application de navigation met en oeuvre la position réelle du récepteur, sa vitesse et la direction de son mouvement pour fournir un service de navigation, de manière connue.

Au cours d'une étape 290, l'application de navigation fournit la position réelle, la vitesse, la direction du mouvement et le service de navigation à l'utilisateur du récepteur. Après une durée prédéterminée, le récepteur retourne à l'étape 230.

On observe que la présente invention peut être mise en place par plusieurs architectures physiques, l'application visée conditionnant le choix d'architecture. Deux solutions opposées sont classiquement utilisées pour les applications de navigation. Leur différence fondamentale réside dans la localisation physique du moyen de calcul de la solution de navigation. On oppose généralement des architectures de type centralisées (calcul de la position des utilisateurs réalisé par un centre de calcul) avec des architectures de type distribuées (calcul de la position par chaque utilisateur).

Selon l'invention, deux principaux types d'architectures peuvent être envisagés :

- pour une utilisation centralisée, l'utilisateur mobile dispose uniquement d'un récepteur mobile de navigation et d'un moyen de communication vers un serveur d'application. Il fournit ses mesures à un serveur contenant les moyens logiciels de prédiction, le système d'information géographique, la base de données et les moyens logiciels de traitement 145. Les informations de navigation prédites sont donc stockées sur serveur. Suivant l'application, ces informations peuvent être retransmises à l'utilisateur ou à un serveur de gestion de l'application.
- pour une utilisation de type distribuée, l'utilisateur mobile dispose du récepteur de navigation et des ressources de calcul nécessaires au fonctionnement des moyens logiciels de traitement 145 et des moyens logiciels de prédiction 135. Suivant l'application envisagée, l'utilisateur dispose également d'un moyen de communication permettant la transmission de ses solutions de navigation et le téléchargement des informations provenant du système d'information géographique. Il peut également disposer du système d'information géographique sur des ressources de mémoire interne, et ne nécessite alors aucun lien de communication avec l'extérieur. Il réalise dans ce cas une navigation dite autonome.

On peut également envisager un type d'architecture mixte, c'est-à-dire à distribution partielle dans lequel le récepteur comporte des moyens pour recevoir les caractéristiques de réception prédites et des moyens logiciels de traitement 145, le serveur d'aide à la radionavigation comprenant alors les moyens logiciels de prédiction 130, la base de données 140 et éventuellement le système d'information géographique 150. Le serveur fournit alors sur requête de l'utilisateur client les caractéristiques de réception prédites, ce dernier se chargeant du traitement pour l'obtention de l'information de positionnement.

On observe que la base de données de prédiction peut, en variante, conserver une information de dérive dans le temps à utiliser pour déterminer la valeur prédite en fonction de l'heure exacte et d'une heure de référence dans chaque plage horaire de validité des prédictions conservées dans la base de données.

En variante, les moyens logiciels de traitement effectuent une interpolation entre les valeurs de caractéristiques prédites pour au moins deux plages horaires pour déterminer les caractéristiques prédites correspondant à une heure exacte.

**Revendications**

1. Procédé de positionnement d'un récepteur de signaux de radionavigation, **caractérisé en ce qu'**il comporte :

- une étape de prédiction, pour une pluralité de positions terrestres, de caractéristiques de réception de signaux émis par des sources satellitaires de signaux de radionavigation, en fonction des positions desdites sources, de modèles de propagation d'ondes électromagnétiques et d'une modélisation topographique de l'environnement de chaque dite position terrestre ;

- une étape de réception, par ledit récepteur, de signaux de radionavigation ;

- une étape de mesure de caractéristiques de réception des signaux reçus par ledit récepteur et

- une étape de traitement des caractéristiques réelles mesurées et des caractéristiques prédites pour fournir une information liée au positionnement dudit récepteur, ladite étape de traitement comprenant :

. un calcul des états de visibilité a posteriori des sources satellitaires à partir des caractéristiques réelles mesurées ;

. un calcul des probabilités de position du récepteur en différents points d'une grille, comme différences entre les états de visibilité a posteriori et des états de visibilité a priori en ces points, lesdits états de visibilité a priori étant obtenus à partir desdites caractéristiques prédites.

2. Procédé selon la revendication 1, **caractérisé en ce que** l'étape de traitement comporte une étape d'appariement des caractéristiques réelles mesurées et des caractéristiques prédites pour fournir au moins une position possible dudit récepteur.

3. Procédé selon la revendication 2, **caractérisé en ce que**, au cours de l'étape de traitement, lorsque les prédictions de plusieurs positions présentent des degrés d'appariement proches, on utilise une extrapolation du déplacement du récepteur et au moins deux de ses positions successives, pour sélectionner une position parmi les positions possibles.

4. Procédé selon l'une quelconque des revendications 1 à 3, **caractérisé en ce qu'**il comporte une étape de détermination de position approximative par ledit récepteur, à partir des signaux de radionavigation reçus et **en ce que**, au cours de l'étape de traitement, l'information liée au positionnement comporte une information de correction à appliquer à la position approximative déterminée par ledit récepteur.

5. Procédé selon l'une quelconque des revendications 1 à 4, **caractérisé en ce qu'**il comporte une étape de détermination de position approximative par ledit récepteur, à partir des signaux de radionavigation reçus et **en ce que**, au cours de l'étape de traitement, l'information liée au positionnement comporte une information de correction à appliquer à chaque mesure de distance à une source de radionavigation pour corriger la position approximative déterminée par ledit récepteur.

6. Procédé selon l'une quelconque des revendications 1 à 5, **caractérisé en ce qu'**il comporte une étape de détermination de position approximative par ledit récepteur, à partir des signaux de radionavigation reçus et **en ce que**, au cours de l'étape de traitement, l'information liée au positionnement comporte une information d'intégrité de la position approximative déterminée par ledit récepteur.

7. Procédé selon l'une quelconque des revendications 1 à 6, **caractérisé en ce qu'**il comporte une étape de détermination de position approximative par ledit récepteur, à partir des signaux de radionavigation reçus et **en ce que**, au cours de l'étape de traitement, l'information liée au positionnement comporte une information d'intégrité de chaque mesure de distance à une source de radionavigation pour corriger la position approximative déterminée par ledit récepteur, permettant au récepteur de ne pas prendre en compte au moins l'un des signaux de radionavigation reçus et/ou de pondérer l'influence de chacune des mesures de distances dans la détermination de sa position.

8. Procédé selon l'une quelconque des revendications 1 à 7, **caractérisé en ce qu'**il comporte une étape de détermination de position approximative par ledit récepteur, à partir des signaux de radionavigation reçus et **en ce que**, au cours de l'étape de prédiction, les positions terrestres de la pluralité de positions terrestres sont choisies autour de ladite position approximative ou autour d'une précédente position déterminée par l'étape de traitement.

9. Procédé selon l'une quelconque des revendications 1 à 8, **caractérisé en ce qu'**une base de données comporte, en regard des positions et des caractéristiques prédites de réception en ces positions, une information représentative d'une plage horaire pendant laquelle les caractéristiques prédites sont considérées comme valables et **en ce que** l'étape de traitement met en oeuvre ladite base de données.

10. Procédé selon l'une quelconque des revendications 1 à 9, **caractérisé en ce que**, au cours de l'étape de traitement, on traite successivement différentes caractéristiques jusqu'à ce qu'au moins une des caractéristiques mises en oeuvre permette de fournir une information de position au récepteur.

11. Procédé selon l'une quelconque des revendications 1 à 10, **caractérisé en ce que** lesdites caractéristiques de réception comportent la puissance reçue des signaux reçus par le récepteur.

12. Procédé selon l'une quelconque des revendications 1 à 11, **caractérisé en ce que** lesdites caractéristiques de réception comportent un ensemble de valeurs caractéristiques des fonctions de corrélation des signaux de radionavigation reçus.

13. Procédé selon l'une quelconque des revendications 1 à 12, **caractérisé en ce que** lesdites caractéristiques de réception comportent la polarisation des signaux reçus par le récepteur.

14. Procédé selon l'une quelconque des revendications 1 à 13, **caractérisé en ce que** lesdites caractéristiques de réception comportent le décalage de fréquence des signaux reçus par le récepteur.

15. Procédé selon l'une quelconque des revendications 1 à 14, **caractérisé en ce que**, au cours de l'étape de traitement, l'une au moins desdites caractéristiques de réception est utilisée pour déterminer l'état de visibilité de chacune des sources de radionavigation, et **en ce que** cet état de visibilité est utilisé pour déterminer l'information liée au positionnement.

16. Procédé selon l'une quelconque des revendications 1 à 14, **caractérisé en ce que**, au cours de l'étape de traitement, on détermine la vitesse et la direction du mouvement du récepteur.

17. Récepteur de radionavigation **caractérisé en ce qu'**il comporte :

- un moyen de mesure de caractéristiques de réception des signaux reçus par ledit récepteur
- un moyen de réception de caractéristiques de réception de signaux émis par des sources satellitaires de radionavigation, prédites pour une pluralité de positions terrestres, en fonction des positions desdites sources, de modèles de propagation d'ondes électromagnétiques et d'une modélisation topographique de l'environnement de chaque dite position terrestre ;
- un moyen de traitement des caractéristiques mesurées et des caractéristiques prédites pour fournir une information de positionnement dudit récepteur, lesdits moyens de traitement étant adaptés à :

. calculer des états de visibilité a posteriori des sources satellitaires à partir des caractéristiques mesurées ;
. calculer des probabilités de position du récepteur en différents points d'une grille, comme différences entre les états de visibilité a posteriori et des états de visibilité a priori en ces points, lesdits états de visibilité a priori étant obtenus à partir desdites caractéristiques prédites.

## Claims

1. Method of positioning a radionavigation signal receiver, **characterised in that** it comprises:

- a step of predicting reception characteristics of signals emitted by satellite radionavigation signal sources for a plurality of terrestrial positions as a function of the positions of said sources, electromagnetic wave propagation models and topographic modelling of the environment of each said terrestrial position;
- a step of receiving radionavigation signals via said receiver;
- a step of measuring reception characteristics of signals received by said receiver, and
- a step of processing actual measured characteristics and predicted characteristics to provide information related to the positioning of said receiver, said processing step comprising:

• calculation of the *a posteriori* visibility states of the satellite sources from the actual measured characteristics;
• calculation of the probability of the position of the receiver at different points in a grid as the difference between the *a posteriori* visibility states and the *a priori* visibility states at these points, said *a priori* visibility states being obtained from said predicted characteristics.

2.  Method according to claim 1, **characterised in that** the processing step includes a step in which actual measured characteristics are matched with predicted characteristics to provide at least one possible position of said receiver.

3.  Method according to claim 2, **characterised in that**, when predictions of several positions have similar degrees of matching during the processing step, the displacement of the receiver and at least two of its successive positions are extrapolated to select one of the possible positions.

4.  Method according to any one of claims 1 to 3, **characterised in that** it comprises a step in which said receiver determines its approximate position from received radionavigation signals, and **in that** during the processing step, the information related to positioning comprises correction information to be applied to the approximate position determined by said receiver.

5.  Method according to any one of claims 1 to 4, **characterised in that** it comprises a step in which said receiver determines its approximate position from received radionavigation signals, and **in that** during the processing step, the information related to positioning comprises correction information to be applied to each measurement of the distance to a radionavigation source to correct the approximate position determined by said receiver.

6.  Method according to any one of claims 1 to 5, **characterised in that** it comprises a step in which said receiver determines its approximate position from received radionavigation signals, and **in that** during the processing step, the information related to positioning comprises information on the integrity of the approximate position determined by said receiver.

7.  Method according to any one of claims 1 to 6, **characterised in that** it comprises a step in which said receiver determines its approximate position from received radionavigation signals, and **in that** during the processing step, the information related to positioning comprises integrity information on each measurement of the distance to a radionavigation source to correct the approximate position determined by said receiver, thus allowing the receiver to not take into account at least one of the received radionavigation signals and/or to weight the influence of each distance measurement when it determines its position.

8.  Method according to any one of claims 1 to 7, **characterised in that** it comprises a step in which said receiver determines its approximate position from the received radionavigation signals, and **in that** during the prediction step, the terrestrial positions of the plurality of terrestrial positions are selected around said approximate position or around a previous position determined in the processing step.

9.  Method according to any one of claims 1 to 8, **characterised in that** a database comprises, with regard to positions and predicted reception characteristics in these positions, information representing a time period during which the predicted characteristics are considered to be valid, and **in that** said database is used during the processing step.

10. Method according to any one of claims 1 to 9, **characterised in that** the different characteristics are processed successively during the processing step until at least one of the characteristics used allows position information to be provided to the receiver.

11. Method according to any one of claims 1 to 10, **characterised in that** said reception characteristics include the received power of signals received by the receiver.

12. Method according to any one of claims 1 to 11, **characterised in that** said reception characteristics include a set of values characteristic of the correlation functions of the received radionavigation signals.

13. Method according to any one of claims 1 to 12, **characterised in that** said reception characteristics include the polarisation of the signals received by the receiver.

14. Method according to any one of claims 1 to 13, **characterised in that** said reception characteristics include the frequency shift of signals received by the receiver.

15. Method according to any one of claims 1 to 14, **characterised in that** at least one of said reception characteristics is used during the processing step to determine the visibility state of each radionavigation source, and **in that** this visibility state is used to determine the information related to positioning.

16. Method according to any one of claims 1 to 14, **characterised in that** the speed and the direction of movement of the receiver are determined during the processing step.

17. Radionavigation receiver, **characterised in that** it comprises:

  - means for measuring reception characteristics of signals received by said receiver;
  - means for receiving reception characteristics of signals emitted by satellite radionavigation sources, predicted for a plurality of terrestrial positions, as a function of the positions of said sources, electromagnetic wave propagation models and topographic modelling of the environment of each said terrestrial position;
  - means for processing measured characteristics and predicted characteristics to provide information on the positioning of said receptor, said processing means being adapted to:

    • calculate the *a posteriori* visibility states of the satellite sources from the measured characteristics;
    • calculate the probability of the position of the receiver at different points in a grid as the difference between the *a posteriori* visibility states and the *a priori* visibility states at these points, said *a priori* visibility states being obtained from said predicted characteristics.


**Patentansprüche**

1. Verfahren zur Positionierung eines Empfängers von Radionavigationssignalen, **dadurch gekennzeichnet, dass** es umfasst:

  - einen Schritt der Vorhersage der Empfangseigenschaften von Signalen, die von Radionavigationssignal-Satellitenquellen ausgesandt werden, für eine Mehrzahl von terrestrischen Positionen als Funktion von Positionen der Quellen, von Ausbreitungsmodellen elektromagnetischer Wellen und von einer topografischen Modellierung der Umgebung jeder der terrestrischen Positionen;
  - einen Schritt des Empfangs von Radionavigationssignalen durch den Empfänger;
  - einen Schritt des Messens von Empfangseigenschaften der Signale, die durch den Empfänger empfangen werden, und
  - einen Schritt der Verarbeitung der gemessenen reellen Eigenschaften und der vorhergesagten Eigenschaften, um eine Information zu liefern, die in Zusammenhang mit der Positionierung des Empfängers steht, wobei der Schritt der Verarbeitung umfasst:

    · eine Berechnung von a posteriori Sichtbarkeitszuständen der Satellitenquellen ausgehend von den gemessenen reellen Eigenschaften;
    · eine Berechnung von Positionswahrscheinlichkeiten des Empfängers an verschiedenen Punkten eines Gitters als Differenzen zwischen den a posteriori Sichtbarkeitszuständen und den a priori Sichtbarkeitszuständen an diesen Punkten, wobei die a priori Sichtbarkeitszustände ausgehend von den vorhergesagten Eigenschaften erhalten werden.

2. Verfahren nach Anspruch 1, **dadurch gekennzeichnet, dass** der Schritt der Verarbeitung einen Schritt der Verknüpfung der gemessenen reellen Eigenschaften und der vorhergesagten Eigenschaften umfasst, um wenigstens eine mögliche Position des Empfängers zu liefern.

3. Verfahren nach Anspruch 2, **dadurch gekennzeichnet, dass** im Verlauf des Schritts der Verarbeitung, wenn die Vorhersagen mehrerer Positionen nahe Verknüpfungsgrade aufweisen, man eine Extrapolation der Verlagerung des Empfängers und wenigstens zwei seiner aufeinander folgenden Positionen verwendet, um eine Position aus den möglichen Positionen auszuwählen.

4. Verfahren nach einem der Ansprüche 1 bis 3, **dadurch gekennzeichnet, dass** es einen Schritt der Bestimmung der ungefähren Position durch den Empfänger ausgehend von den empfangenen Radionavigationssignalen umfasst, und dass im Verlauf des Schritts der Verarbeitung die Information, die mit der Positionierung in Verbindung steht, eine Information einer Korrektur enthält, die auf die ungefähre Position anzuwenden ist, welche von dem Empfänger bestimmt wurde.

5. Verfahren nach einem der Ansprüche 1 bis 4, **dadurch gekennzeichnet, dass** es einen Schritt der Bestimmung der ungefähren Position durch den Empfänger ausgehend von den empfangenen Radionavigationssignalen umfasst, und dass im Verlauf des Schritts der Verarbeitung die Information, die mit der Positionierung in Verbindung steht, eine Information der Korrektur enthält, die auf jede Messung des Abstands bei einer Radionavigationsquelle anzuwenden ist, um die vom Empfänger bestimmte ungefähre Position zu korrigieren.

6. Verfahren nach einem der Ansprüche1 bis 5, **dadurch gekennzeichnet, dass** es einen Schritt der Bestimmung der ungefähren Position durch den Empfänger ausgehend von den empfangenen Radionavigationssignalen umfasst, und dass im Verlauf des Schritts der Verarbeitung die information, die mit der Positionierung in Verbindung steht, eine Information der Integrität der vom Empfänger bestimmten ungefähren Position enthält.

7. Verfahren nach einem der Ansprüche 1 bis 6, **dadurch gekennzeichnet, dass** es einen Schritt der Bestimmung der ungefähren Position durch den Empfänger ausgehend von den empfangenen Radionavigationssignalen umfasst, und dass im Verlauf des Schritts der Verarbeitung die Information, die mit der Positionierung in Verbindung steht, eine Information der Integrität jeder Abstandsmessung bei einer Radionavigationsquelle enthält, um die vom Empfänger bestimmte ungefähre Position zu korrigieren, was es dem Empfänger ermöglicht, wenigstens eines der empfangenen Radionavigationssignale nicht zu berücksichtigen und/ oder den Einfluss jeder der Abstandsmessungen bei der Bestimmung seiner Position zu gewichten.

8. Verfahren nach einem der Ansprüche 1 bis 7, **dadurch gekennzeichnet, dass** es einen Schritt der Bestimmung der ungefähren Position durch den Empfänger ausgehend von den empfangenen Radionavigationssignalen umfasst, und dass im Verlauf des Schritts der Vorhersage die terrestrischen Positionen aus der Mehrzahl von terrestrischen Positionen um die ungefähre Position herum oder um eine vorhergehende Position herum ausgewählt werden, die durch den Schritt der Verarbeitung bestimmt wird.

9. Verfahren nach einem der Ansprüche 1 bis 8, **dadurch gekennzeichnet, dass** eine Datenbank, die im Hinblick auf die Positionen und die vorhergesagten Empfangseigenschaften an diesen Positionen eine Information enthält, die repräsentativ ist für einen zeitlichen Bereich, während dessen die vorhergesagten Eigenschaften als gültig angesehen werden, und dass der Schritt der Verarbeitung die Datenbank verwendet.

10. Verfahren nach einem der Ansprüche 1 bis 9, **dadurch gekennzeichnet, dass** im Verlauf des Schritts der Verarbeitung man nacheinander verschiedene Eigenschaften verarbeitet, bis wenigstens eine der verwendeten Eigenschaften es erlaubt, eine Positionsinformation an den Empfänger zu liefern.

11. Verfahren nach einem der Ansprüche 1 bis 10, **dadurch gekennzeichnet, dass** die Empfangseigenschaften die empfangene Leistung der Signale umfassen, die vom Empfänger empfangen werden.

12. Verfahren nach einem der Ansprüche 1 bis 11, **dadurch gekennzeichnet, dass** die Empfangseigenschaften eine Gruppe von Werten umfassen, die charakteristisch sind für Korrelationsfunktionen der empfangenen Radionavigationssignale.

13. Verfahren nach einem der Ansprüche 1 bis 12, **dadurch gekennzeichnet, dass** die Empfangseigenschaften die Polarisation der vom Empfänger empfangenen Signale umfassen.

14. Verfahren nach einem der Ansprüche 1 bis 13, **dadurch gekennzeichnet, dass** die Empfangseigenschaften die Frequenzverschiebung der vom Empfänger empfangenen Signale umfassen.

15. Verfahren nach einem der Ansprüche 1 bis 14, **dadurch gekennzeichnet, dass** im Verlauf des Schritts der Verarbeitung wenigstens eine der Empfangseigenschaften verwendet wird, um den Sichtbarkeitszustand jeder der Radionavigationsquellen zu bestimmen, und dass dieser Sichtbarkeitszustand verwendet wird, um die Information zu bestimmen, die mit der Positionierung in Verbindung steht.

16. Verfahren nach einem der Ansprüche 1 bis 14, **dadurch gekennzeichnet, dass** im Verlauf des Schritts der Verarbeitung man die Geschwindigkeit und die Richtung der Bewegung des Empfängers bestimmt.

17. Radionavigationsempfänger, **dadurch gekennzeichnet, dass** er umfasst:

- eine Einrichtung zur Messung von Empfangseigenschaften von Signalen, die von dem Empfänger empfangen werden,
- eine Einrichtung zum Empfangen von Empfangseigenschaften von Signalen, die von Radionavigations-Satellitenquellen ausgesandt werden, vorhergesagt für eine Mehrzahl von terrestrischen Positionen, als Funktion von Positionen der Quellen, von Modellen der Ausbreitung elektromagnetischer Wellen und von einer topografischen Modellierung der Umgebung jeder der terrestrischen Positionen;

- eine Einrichtung zur Verarbeitung der gemessenen Eigenschaften und der vorhergesagten Eigenschaften, um eine Information der Positionierung des Empfängers zu liefern, wobei die Einrichtung zur Verarbeitung dazu ausgelegt ist:

· a posteriori Sichtbarkeitszustände der Satellitenquellen ausgehend von den gemessenen Eigenschaften zu berechnen;

· Positionswahrscheinlichkeiten des Empfängers an verschiedenen Punkten eines Gitters als Differenzen zwischen den a posteriori Sichtbarkeitszuständen und den a priori Sichtbarkeitszuständen an diesen Punkten zu berechnen, wobei die a priori Sichtbarkeitszustände ausgehend von den vorhergesagten Eigenschaften erhalten werden.

150

Système d'information
géographique

130

Système informatique

135 Moyens logiciels
de prédiction

140 Base de données

145 Moyens logiciels
de traitement

155 Application de
navigation

100

Récepteur mobile

105 Mesure

110 Transmission

Figure 1

```
┌─────────────────────────────────────┐
│      Chargement d'éphémérides        │╮
└─────────────────────────────────────┘╰─ 205
                    │
                    ▼
┌─────────────────────────────────────┐
│      Chargement de modélisation      │╮
│    Topographique d'environnement     │╰─ 210
└─────────────────────────────────────┘
                    │
                    ▼
┌─────────────────────────────────────┐
│    Détermination de résolution spatiale │╮
│           et temporelle              │╰─ 220
└─────────────────────────────────────┘
                    │
                    ▼
┌─────────────────────────────────────┐
│     Détermination de prédictions de   │╮
│    caractéristiques de propagation    │╰─ 225
└─────────────────────────────────────┘
                    │
                    ▼
┌─────────────────────────────────────┐
│         Réception de signaux         │╮
└─────────────────────────────────────┘╰─ 230
                    │
                    ▼
┌─────────────────────────────────────┐
│      Mesure de caractéristiques      │╮
│      de propagation réelle           │╰─ 235
└─────────────────────────────────────┘
                    │
                    ▼
┌─────────────────────────────────────┐
│         Evaluation de position       │╮
└─────────────────────────────────────┘╰─ 240
                    │
                    ▼
┌─────────────────────────────────────┐
│      Transmission de mesures et      │╮
│      d'évaluation de position        │╰─ 245
└─────────────────────────────────────┘
                    │
                    ▼
┌─────────────────────────────────────┐
│  Sélection de positions et plage horaire │╮
└─────────────────────────────────────┘╰─ 250
                    │
                    ▼
┌─────────────────────────────────────┐
│  Sélection d'une première caractéristique │╮
└─────────────────────────────────────┘╰─ 255
                    │
                    ▼
             Vers étape 260
```

Figure 2A

Depuis étape 255

```
┌─────────────────────────────┐
│   Recherche de positions     │ ⟋ 260
└─────────────────────────────┘
              │
              ▼
┌─────────────────────────────┐
│    Fiabilité suffisante ?     │ ⟋ 265
└─────────────────────────────┘
       │ Non          │ Oui
       ▼              │
┌───────────────────────────┐ │
│ Sélection d'une caractéristique │ ⟋ 270
└───────────────────────────┘ │
              │               │
              ▼               ▼
┌─────────────────────────────┐
│  Détermination de position réelle │ ⟋ 275
└─────────────────────────────┘
              │
              ▼
┌─────────────────────────────┐
│  Transmission de position réelle  │ ⟋ 280
└─────────────────────────────┘
              │
              ▼
┌─────────────────────────────┐
│     Service de navigation     │ ⟋ 285
└─────────────────────────────┘
              │
              ▼
┌─────────────────────────────┐
│  Transmission de position réelle  │ ⟋ 290
│   et de service de navigation    │
└─────────────────────────────┘
              │
              ▼
```

Vers étape 230

Figure 2B

Figure 4

Figure 5

Figure 6

Figure 7

Depuis étape 250

Calcul des données de corrections — 300

Transmission des données de corrections — 310

Calcul de la position corrigée — 320

Vers étape 285

Figure 3A


Depuis étape 250

Évaluation de l'intégrité des mesures — 330

Transmission des données d'intégrité — 340

Mise à jours du calcul de la position — 350

Transmission du statut d'intégrité — 360

Vers étape 285

Figure 3B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0186315 A

**Littérature non-brevet citée dans la description**

- **Yongcheon et al.** Evaluation of multipath error and signal propagation in complex 3D urban enviroments for GPS multipath identification. *la conférence ION GNSS 17th International meeting of the satellite division,* 21 Septembre 2004, 1147-1156